# EUROPÄISCHE PATENTSCHRIFT

(11) **EP 1 562 819 B1**
(45) Veröffentlichungstag und Bekanntmachung des Hinweises auf die Patenterteilung: **26.07.2006**
(21) Anmeldenummer: 03769409.8
(22) Anmeldetag: 18.10.2003
(51) Int. Cl.: B62D 21/15

(54) **VORDERWAGENSTRUKTUR**
FRONT-END VEHICLE STRUCTURE
STRUCTURE AVANT DE VEHICULE AUTOMOBILE

(30) Priorität: 23.11.2002 DE 10254693
(43) Veröffentlichungstag der Anmeldung: 17.08.2005
(73) Patentinhaber: DaimlerChrysler AG, 70567 Stuttgart (DE)
(72) Erfinder: HAGEMANN, Georg, Stefan, 70327 Stuttgart (DE); SCHMID, Oliver, 74354 Besigheim (DE)
(86) Internationale Anmeldenummer: PCT/EP2003/011514
(87) Internationale Veröffentlichungsnummer: WO 2004/048181

(56) Entgegenhaltungen:
- JP-A- 10 287 269
- JP-A- 2002 302 063
- US-A- 5 913 565
- US-B1- 6 328 377

## Beschreibung

Die Erfindung betrifft eine Vorderwagenstruktur für ein Kraftfahrzeug, insbesondere für ein Nutzfahrzeug, gemäß dem Oberbegriff des Anspruchs 1.

Nutzfahrzeuge herkömmlicher Bauart sind in der Regel so aufgebaut, dass zwei Rahmenlängsträger mit Rahmenquerträgern verbunden sind und solcherart den Tragrahmen bilden, wobei die Rahmenlängsträger bis an einen vorderen und/oder einen hinteren Stoßfänger, heran geführt werden und in der Regel über ein Crashboxteil mit einem abschließenden Querträger und dem Stoßfänger verbunden sind. Besonders im Bereich des Vorderwagens muss der Tragrahmen neben der tragenden Funktion als Rahmenbauteil auch eine integrierende Funktion, z.B. zur Aufnahme der Vorderachse und des Antriebsaggregats, gewährleisten.

Aufgrund der dem jeweiligen Gesamtgewicht angepassten Bauteile zur Optimierung des Nutzlastanteils, werden die Bauteile je nach Fahrzeugtyp unterschiedlich stark dimensioniert. Diese unterschiedliche Dimensionierung führt zu komplexen Bauteilen, deren Herstellung mit hohen Kosten verbunden ist.

Aus der DE 42 40 344 A1 ist ein Hilfsrahmen für ein Lkw-Chassis bekannt. Der Hilfsrahmen soll zum Bedecken von verschiedenen Chassis-Rahmen dienen, bei denen eine Abkröpfung der Längsträger an verschiedenen Stellen liegt. Der Hilfsrahmen verwendet Längsträger mit unterschiedlichem Profil in Längsrichtung. Im vorderen Bereich hat der Längsträger ein U-Profil und im übrigen Bereich hat er ein Z-Profil. Der obere Schenkel des Z-Profils schließt an den oberen Schenkel des U-Profils an; dagegen ist der untere Schenkel des Z-Profils gegenüber dem unteren Schenkel des U-Profils in Querrichtung versetzt und zwar zum benachbarten Längsträger hin. So bilden die versetzten unteren Schenkel der Z-Profile benachbarter Längsträger eine geringere lichte Weite des Hilfsrahmens, und die unteren Schenkel der U-Profile benachbarter Längsträger bilden eine größere lichte Weite des Hilfsrahmens. Mit einer Größe dieses Hilfsrahmens können somit verschiedene Lkw-Chassis bedeckt werden.

Aus der DE 40 06 418 A1 ist ein Tragrahmen für einen Lastkraftwagen bekannt. Der Tragrahmen besteht im wesentlichen aus Rahmenlängsträgern und Rahmenquerträgern sowie einer Kugel- oder Verbundlenkerachse. Ferner weist er einen in der Breiteerstreckung des Fahrzeugs über die Enden der Längsträger hinausgehenden, im Abstand von der Stoßstange angeordneten vorderen Querträger auf, der als Vorderwagenmodul ausgebildet ist. Der Vorderwagenmodul ist auf seiner zur Fahrzeugmitte gerichteten Seite mit den Enden des Rahmerilängsträgers und auf seiner in Fahrtrichtung gewandten Seite mit der Stoßstange verbunden. Die Kurbel- oder Verbundlenkerachse ist derart an dem Vorderwagenmodul gelagert, dass ihre Kröpfung das Motorende umgreift.

Bedingt durch unterschiedliche Radstände, Anordnung von Vorlauf- oder Nachlaufachsen sowie unterschiedliche Rahmenlängsträgerhöhen, entsteht eine Variationsvielfalt des Nutzfahrzeugs erst im Aufbaubereich. Der Vorderwagenmodul an sich kann in größerer Stückzahl vormontiert und bevorratet werden und ermöglicht so eine Bandmontage.

Aus der DE 42 28 314 A1 ist ein Chassis für einen Lastkraftwagen bekannt. Die Tragstruktur eines aus einem Vorderwagen und einem Hinterwagen bestehenden Lastkraftwagens ist dreigeteilt und besteht aus einem Zentraltragwerk, einem bügelförmigen Vorderrahmen und einem die Aufbauten tragenden Rahmenlängsträgerverband. Das Zentraltragwerk umgreift die Antriebsaggregate und ist im wesentlichen im Kernschatten der Vorderräder angeordnet. Ferner weist es eine nach unten offene kiepenartige Form auf. Das Zentraltragwerk, ist auf seiner Rückseite fest, aber lösbar mit dem die Aufbauten tragenden Rahmenlängsträgerverband und auf seiner Vorderseite mit einem vorderen, partiell das Fahrerhaus stützenden und die Frontteile tragenden, bügelförmigen Vorderrahmen verbunden. Solcherart können an dem immer einheitlichen. Vorderwagen unterschiedliche Hinterwagen auch mit unterschiedlicher Höhe des Rahmenlängsträgerverbands adaptiert werden. Über konstruktive Details des Vorderwagens ist jedoch in der DE 42 28 314 A1 nichts offenbart.

Aus der US 6,328,377 B1 ist eine Vorderwagenstruktur der eingangs genannten Art bekannt, die zwei Längsträger sowie zwei Crashboxelemente aufweist. Des Weiteren sind zwei Verbindungsträger vorgesehen, die jeweils einen der Längsträger mit dem zugehörigen Crashboxelement verbinden. Die Verbindungsträger können dabei jeweils aus einem Innenteil und zur Versteifung des Innenteils aus einem Oberteil und einem Unterteil zusammengebaut sein. Bei der bekannten Vorderwagenstruktur ist das Innenteil durch ein Hohlprofil gebildet, während Unterteil und Oberteil jeweils durch ein L-Profil gebildet sind. Dabei umgreifen die L-Profile das Hohlprofil umfangsmäßig vollständig.

Aus der gattungsgemäßen US 5,913,565 ist eine weitere Vorderwagenstruktur bekannt, bei der an jeder Fahrzeugseite ein Verbindungsträger einen Längsträger mit einem Crashboxelement verbindet. Dabei sind die Verbindungsträger jeweils durch ein mehrteiliges Hohlprofil gebildet, das mit Hilfe eines Versteifungsprofils verstärkt sein kann. Dabei ist das Versteifungsprofil weitgehend an das Profil des Verbindungsträgers angepasst und optional an dessen Außenseite oder an dessen Innenseite angeordnet.

Die JP 10-287269 zeigt eine weite Vorderwagenstruktur, bei der ein dünnwandiges vorderes Strangpressprofil in einem Verbindungsbereich an ein hinteres, dickwandiges Strangpressprofil angeschlossen ist. Im Verbindungsbereich sind U-förmige bzw. L-förmige oder C-förmige Aussteifungselemente von unten bzw. von oben angesetzt, derart, dass die Versteifungselemente sowohl das vordere als auch das hintere Strangpressprofil im Verbindungsbereich seitlich übergreifen. Hierdurch kann der Verbindungsbereich effektiv ausgesteift werden.

Die vorliegende Erfindung beschäftigt sich mit dem Problem, eine verbesserte Ausführungsform einer Vorderwagenstruktur anzugeben und dadurch den Produktionsprozess zu vereinfachen.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, eine Vorderwagenstruktur für ein Kraftfahrzeug, insbesondere für ein Nutzfahrzeug, so zu gestalten, dass auf Basis einfacher Blechgeometrien die Erstellung sehr komplexer Bauteile, wie z.B. eine vormontierbare Vorderwagenstruktur, möglich ist.

Dies wird dadurch erreicht, dass zwei Verbindungsträger vorgesehen sind, die jeweils einen der Längsträger mit dem zuge-hörigen Crashboxelement verbinden, wobei die Verbindungsträger jeweils aus drei Teilen, nämlich aus einer Innenschale (Innenteil) und einer Oberschale (Oberteil oder oberer Blechstreifen) und einer Unterschale (Unterteil oder unterer Blechstreifen) zusammengebaut sind, die jeweils die Innenschale versteifen.

Die Innen-, die Ober- und die Unterschale bzw. die Innen-, die Ober- und die Unterteile sind zweckmäßig als Blechbiegeteile ausgebildet, wobei die Ober- und die Unterschale im wesentlichen randseitig an der Innenschale und quer zu dieser angeordnet sind.

Durch die Trennung der Tragstruktur in mehrere Blechteile sind diese nur als Blechbiegeteile zu verformen und somit einfach zu fertigen. Im Zuschnitt sind die Bauteile für den linken und den rechten Verbindungsträger gleich, sie müssen lediglich spiegelbildlich gekantet werden. Hierdurch wird zum einen eine vereinfachte Herstellung der Blechteile erreicht und zum anderen wird durch ein einfaches Abkanten ein Ziehvorgang vermieden, der bei dünneren Blechbauteilen problematisch ist und den Werkstoff stark strapaziert.

Die Erfindung bietet weitere Vorteile, wenn jeder Verbindungsträger mit seinem vorderen Ende in das zugehörige Crashboxelement und/oder mit einem hinteren Ende in den zugehörigen Längsträger einschiebbar ausgebildet ist. Durch die Trennung der Tragstruktur im Bereich einer Vorderachse wird ermöglicht, die Fahrzeuglänge durch entsprechende Variation der Länge der Verbindungsträger zu beeinflussen.

Des weiteren kann vorgesehen sein, dass die Verbindungsträger und die Längsträger jeweils ein C-Profil aufweisen und dass ein Außenmaß des jeweiligen Verbindungsträgers in zusammen gebautem Zustand mit einem Innenmaß des jeweiligen Längsträgers korrespondiert. Hierdurch werden die Montage der Vorderwagenstruktur vereinfacht und im Hinblick auf eine spätere Kraftübertragung, wie z.B. eine Übertragung von Querkräften, deutliche Vorteile gegenüber herkömmlichen Konstruktionen erreicht.

Eine besonders vorteilhafte Ausgestaltung der erfindungsgemäßen Lösung ist dadurch gekennzeichnet, dass die Innen-, die Ober- und die Unterschale mittels sich entlang der abgekanteten Randabschnitte erstreckenden Schweißverbindungen verbunden sind. Eine Schweißraupe oder -naht verläuft demnach entlang der abgekanteten Randabschnitte der Innenschale, die parallel zur Ober- oder Unterschale verlaufen und daran flächig anliegen, und verschließt somit einen zwischen oder der Ober-oder Unterschale und der Innenschale liegenden Spalt und verhindert somit die besonders problematische Spaltkorrosion. Da die Tragstruktur des Fahrzeugs nahezu ungeschützt dem unter dem Fahrzeug auftretenden Spritzwasser ausgesetzt ist, welches besonders in den Wintermonaten zusätzlich durch Chloride belastet ist, wird durch die umlaufende Schweißraupe die Qualität und damit verbunden die Lebensdauer des Nutzfahrzeug erhöht.

Eine besonders günstige Weiterbildung der erfindungsgemäßen Lösung ist dadurch gekennzeichnet, dass die Innen-, die Ober-und die Unterschale in gleicher und/oder unterschiedlicher Blechstärke ausbildbar sind. Nutzfahrzeuge werden für verschiedenste Einsatzgebiete, wie z.B. für Schwerlasttransport oder zur Personenbeförderung hergestellt und erfordern dementsprechend unterschiedlich starke Tragstrukturen. Diesem Umstand wird in besonders günstiger Weise durch die Verwendung gleicher und/oder unterschiedlicher Blechstärken für die Ausbildung der Verbindungsträger Rechnung getragen. So ist der Einsatz starker Bleche besonders für Fahrzeuge mit hohen Nutzlasten günstig, während für leichtere Fahrzeuge geringere Blechstärken ausreichend sind. Hierdurch kann flexibel auf die Anforderungen an die Fahrzeuge reagiert werden, ohne grö-ßere Änderungen im Produktionsprozess vornehmen zu müssen.

Zweckmäßig kann vorgesehen sein, dass die Randabschnitte durch Einschnitte voneinander getrennt ausgebildet sind. Die Einschnitte an der Innenschale bewirken eine Vereinfachung des Umformprozesses, bei welchem die Randabschnitte der Innenschale rechtwinklig abgekantet werden. Da die abgekanteten Randabschnitte nicht parallel zueinander angeordnet sind, wäre das Material ohne Einschnitte erheblichen Ziehvorgängen und damit Belastungen unterworfen. Diese lassen sich durch die oben erwähnten Einschnitte gänzlich vermeiden, was neben der erwähnten Vereinfachung des Produktionsprozesses auch eine Schonung des Werkstoffs bewirkt.

Eine vorteilhafte Weiterbildung ist dadurch gekennzeichnet, dass die Vorderwagenstruktur im Bereich der Verbindungsträger zur Aufnahme einer Starrachse oder einer Einzelradaufhängung ausgebildet ist. Je nach späterem Verwendungszweck des Fahrzeugs, ob z.B. als Baustellenfahrzeug oder als Omnibus, ist mit der erfindungsgemäßen Lösung eine flexible Gestaltung der Vorderwagenstruktur machbar, so dass z.B. für Schwerlastfahrzeuge der Einbau einer Starrachse und für leichtere Fahrzeuge der Einbau einer Einzelradaufhängung ermöglicht wird.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Die Figuren zeigen schematisch:
- Fig. 1: eine perspektivische Ansicht auf eine erfindungsgemäße Vorderwagenstruktur mit Verbindungsträgern,
- Fig. 2: eine Ansicht wie in Fig. 1, jedoch aus einer andren Perspektive,
- Fig. 3: eine Explosionsdarstellung eines der Verbindungsträger.

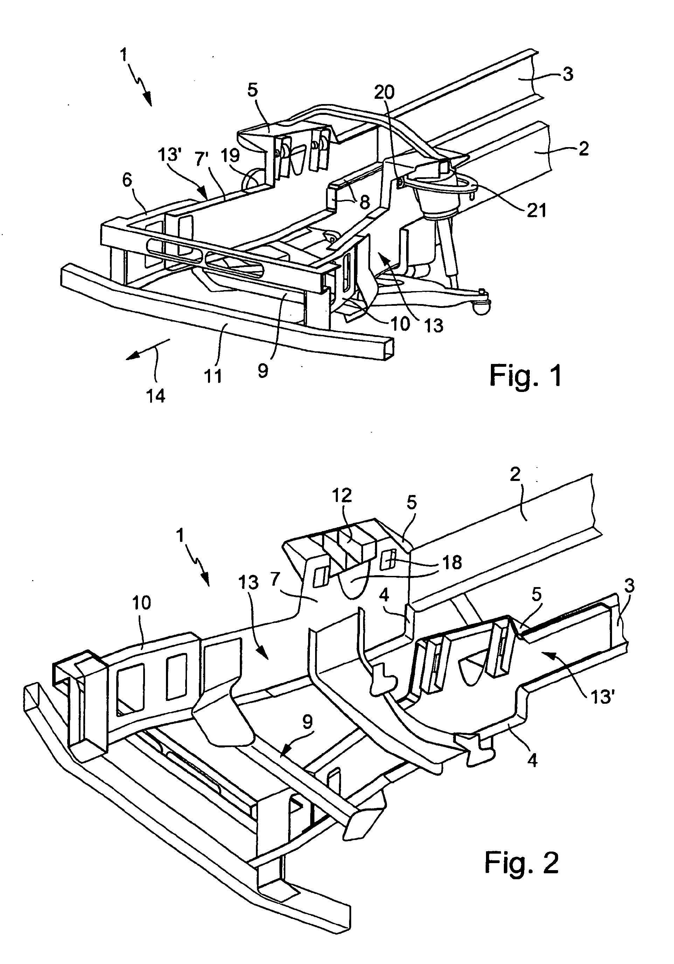

Entsprechend Fig. 1 zeigt eine erfindungsgemäße Vorderwagenstruktur 1 zwei Verbindungsträger 13 bzw. 13', welche sich im wesentlichen parallel zu einer durch einen Pfeil symbolisierten Fahrzeuglängsrichtung 14 erstrecken. Die Verbindungsträger 13, 13' sind zwischen einem hinteren Ende eines ersten Crashboxteils 6 und einem vorderen Ende eines rechten Längsträgers 3 bzw. zwischen einem hinteren Ende eines zweiten Crashboxteils 10 und einem vorderen Ende eines linken Längsträgers 2 stehend angeordnet und in horizontaler Richtung voneinander beanstandet.

An einem jeweiligen vorderen Ende des ersten Crashboxteils 6 und des zweiten Crashboxteils 10 sind diese in Fahrzeugquerrichtung über einen Stoßfänger 11 miteinander verbunden. Die Verbindungsträger 13, 13' bilden einen Bereich einer späteren Vorderachsaufnahme und sind über einen Querträger 9 in Fahrzeugquerrichtung miteinander verbunden. Die Verbindungsträger 13, 13' können dabei wahlweise zur Aufnahme einer Starrachse oder einer Einzelradaufhängung ausgebildet sein.

In dem in Fig. 1 und Fig. 2 dargestellten Bereich der Vorderwagenstruktur 1 ist zwischen den beiden Verbindungsträgern 13, 13' üblicherweise eine hier nicht gezeigte Antriebseinrichtung des Nutzfahrzeugs angeordnet. Eine solche Antriebseinrichtung umfasst in der Regel eine Brennkraftmaschine sowie ein Getriebe, weshalb die Verbindungsträger 13, 13' in Richtung eines vorderen Endes des Nutzfahrzeugs quer zur Fahrzeuglängsrichtung 14 aufgeweitet sind.

Die Vorderwagenstruktur 1 ist zu einer vertikal durch die Fahrzeuglängsmitte verlaufenden Ebene spiegelbildlich aufgebaut, so dass im Folgenden lediglich eine Hälfte detailliert beschrieben wird. Für die andere Hälfte gilt jedoch sinngemäß dasselbe.

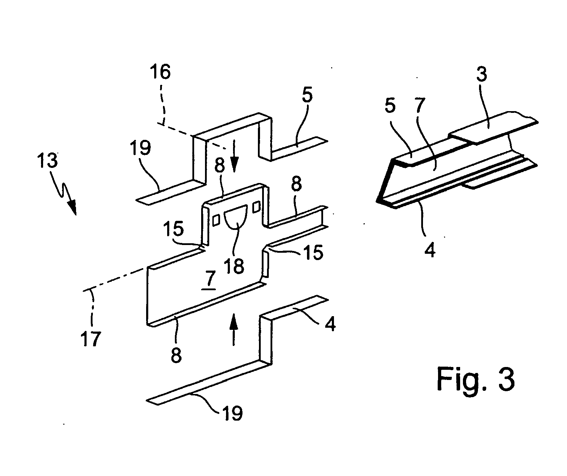

Der Verbindungsträger 13 ist gemäß einer Explosionsdarstellung in Fig. 3 aus im wesentlichen drei Komponenten zusammengesetzt.

Diese Komponenten umfassen zum einen eine stehend positionierte Innenschale 7, welche an ihrem oberen und an ihrem unteren Rand jeweils zur Schalenebene rechtwinklig abgekantete Randabschnitte 8 aufweist, die um eine in der Schalenebene und parallel zum jeweiligen Rand verlaufende Knickachse 17 in Richtung zur oben erwähnten Spiegelebene abgewinkelt sind. Die einzelnen Randabschnitte 8 sind durch Einschnitte 15 voneinander getrennt, welche bewirken, dass beim Biegevorgang der Werkstoff lediglich um eine Achse gebogen wird (vgl. Fig. 3, Pos. 17) und somit mehraxiale, den Werkstoff stark strapazierende Ziehvorgänge vermieden werden.

Zum anderen umfassen diese Komponenten eine parallel zu den oberen Randabschnitten 8 entlang laufende und flächig an diesen anliegende und mit diesen verbundene Oberschale 5 und eine parallel zu den unteren Randabschnitten 8 entlang laufende flächig an diesen anliegende und mit diesen verbundene Unterschale 4.

Die Oberschale 5 und die Unterschale 4 sind dabei jeweils als Blechstreifen ausgebildet, welche den jeweiligen Randabschnitten 8 der Innenschale 7 entsprechend um mehrere parallel zueinander angeordnete und voneinander beabstandete Biegeachsen 16 gebogen sind, welche orthogonal zur Ebene der Innenschale 7 verlaufen und wovon beispielhaft eine in Fig. 3 eingezeichnet ist (vgl. Fig. 3, Pos. 16).

Die Oberschale 5 und die Unterschale 4 sind dabei so an der Innenschale 7 angeordnet, dass diese flächenparallel zu den Randabschnitten 8 der Innenschale 7 mit einer Längskante 19 bündig an der Knickachse 17 anliegen und dadurch auf der der oben erwähnten Spiegelebene abgewandten Außenseite des Verbindungsträgers 13 eine durchgehende ebene Fläche bilden.

Die Oberschale 5 und die Unterschale 4 sind mit der Innenschale 7 jeweils durch Schweißverbindungen verbunden, welche sich entlang der Randabschnitte 8 erstrecken und welche günstiger Weise einen eventuell auftretenden Spalt zwischen der Oberschale 5 und der Innenschale 7 bzw. der Unterschale 4 und der Innenschale 7 verschließen und somit die Gefahr der Spaltkorrosion ausschließen. Gleichzeitig wird mit einer umlaufend angeordneten Schweißraupe eine feste Verbindung der drei Schalen 4, 5 und 7 geschaffenen, welche die Steifigkeit des Verbindungsträgers 13 erhöht.

Der zusammengebaute Verbindungsträger 13 wird gemäß Fig. 3 in den Längsträger 2 derart eingeschoben, dass die offene Seite des durch die Innenschale 7 und die Ober- bzw. Unterschalen 4, 5 gebildeten C-förmigen Profils beim Verbindungsträger 13 als auch beim Längsträger 2 in dieselbe Richtung, nämlich in Richtung der oben beschriebenen Spiegelebene, weisen.

Der Verbindungsträger 13 ist dabei so zusammengesetzt, dass er passgenau in den Längsträger 2 eingeschoben werden kann, wodurch Querkräfte und Momente übertragen werden können. Das heißt, ein Außenmaß des Verbindungsträgers 13 korrespondiert in zusammengebautem Zustand mit einem Innenmaß des linken Längsträgers 2.

Die Verbindung zwischen dem Verbindungsträger 13 und dem linken Längsträger 2 erfolgt z.B. durch in Fig. 3 nicht dargestellte Schraub- oder Schweißverbindungen.

Entsprechend Fig. 2 sind an dem Verbindungsträger 13 bzw. an der Innenschale 7 mehrere Konsolen 12 angeordnet, die zur Aufnahme eines in Fig. 1 dargestellten Lagers 20 eines oberen Querlenkers 21 und zur Versteifung des Verbindungsträgers 13 ausgebildet sind. Die Verbindung zwischen der Innenschale 7 und den Konsolen 12 erfolgt ebenfalls z.B. durch Schraub-, Niet- oder Schweißverbindungen.

Gemäß Fig. 3 weist die Innenschale 7 mehrere Aussparungen 18 auf, durch welche Bauteile der Fahrwerkskonstruktion bzw. des Querlenkers 21 geführt werden können. Eine Anpassung an unterschiedliche Lastfälle, wie sie bei unterschiedlichen Fahrzeugtypen und/oder unterschiedlichem Verwendungszweck des Fahrzeugs auftreten, erfolgt insbesondere durch Variation der Blechstärke der einzelnen Schalen 4, 5 und 7 sowie gegebenenfalls der Konsolen 12.

Durch die Trennung des Verbindungsträgers 13 in die drei erwähnten Schalen 4, 5 und 7 ist es möglich diese einzeln als Blechbiegeteile herzustellen und somit einfach zu fertigen. Des weiteren bildet die Vorderwagenstruktur 1 mit den daran anbringbaren Komponenten eine vormontierbare Einheit, die im Rahmen einer Vormontage vormontierbar ist und im Rahmen einer Endmontage als integrierte Einheit an den Längsträgern 2, 3 bzw. den Crashboxteilen 6, 10 befestigbar ist.

Zusammenfassend lässt sich die Erfindung im wesentlichen wie folgt charakterisieren:

Der Verbindungsträger 13 ist im wesentlichen aus drei Komponenten zusammengesetzt: Der stehend positionierten Innenschale 7 mit randseitig rechtwinklig abgekanteten Randabschnitten 8 und den parallel dazu entlang laufenden und flächig an diesen anliegenden Ober- bzw. Unterschalen 4 bzw. 5.

Die Oberschale 5 und die Unterschale 4 sind mit der Innenschale 7 jeweils durch umlaufend geschlossene Schweißverbindungen verbunden, welche sich entlang der Randabschnitte 8 erstrecken, die Gefahr der Spaltkorrosion ausschließen und die Steifigkeit des Verbindungsträgers 13 erhöhen.

Der zusammengebaute Verbindungsträger 13 kann in den Längsträger 2 passgenau eingeschoben und mit diesem verschraubt oder verschweißt werden.

Durch die Trennung des Verbindungsträgers 13 in drei Bauteile, nämlich der Innenschale 7, der Oberschale 5 und der Unterschale 4 ist es möglich, diese als Blechbiegeteile herzustellen und einfach zu fertigen, ohne den Werkstoff einem mehrdimensionalen Ziehvorgang zu unterziehen.

Die Vorderwagenstruktur 1 kann dabei wahlweise zur Aufnahme einer Starrachse oder einer Einzelradaufhängung ausgebildet sein. Eine Anpassung an unterschiedliche Lastfälle erfolgt zweckmäßig durch Variation der Blechstärke der Innenschale 7, der Oberschale 5 und/oder der Unterschale 4 bzw. der Konsolen 12.

## Patentansprüche

1. Vorderwagenstruktur (1) für ein Kraftfahrzeug, insbesondere für ein Nutzfahrzeug, umfassend zwei Längsträger (2,3) sowie zwei Crashboxelemente (6,10),
- wobei zwei Verbindungsträger (13,13') vorgesehen sind, die jeweils einen der Längsträger (2,3) mit dem zugehörigen Crashboxelement (10,6) verbinden,
- wobei die Verbindungsträger (13,13') jeweils aus einem Innenteil (7) und zur Versteifung des Innenteils (7) aus einem Oberteil (5) und einem Unterteil (4) zusammengebaut sind,
**dadurch gekennzeichnet,**
- **dass** das Innenteil eine Innenschale (7) ist, die im wesentlichen stehend positioniert ist und an einem oberen Ende abgekantete obere Randabschnitte (8) und an einem unteren Ende weitere abgekantete untere Randabschnitte (8) aufweist,
- **dass** das Oberteil ein oberer Blechstreifen (5) ist, der parallel zu den oberen Randabschnitten (8) verläuft, daran flächig anliegt und damit verbunden ist,
- **dass** das Unterteil ein unterer Blechstreifen (4) ist, der parallel zu den unteren Randabschnitten (8) verläuft, daran flächig anliegt und damit verbunden ist.

2. Vorderwagenstruktur nach Anspruch 1,
**dadurch gekennzeichnet,**
**dass** Innenteil (7), Oberteil (5) und Unterteil (4) als Blechbiegeteile ausgebildet sind, wobei Oberteil (5) und Unterteil (4) im wesentlichen randseitig am Innenteil (7) und quer dazu angeordnet sind.

3. Vorderwagenstruktur nach einem der Ansprüche 1 und 2,
**dadurch gekennzeichnet,**
**dass** jeder Verbindungsträger (13,13') mit seinem vorderen Ende in das zugehörige Crashboxelement (10,6) und/oder mit seinem hinteren Ende in den zugehörigen Längsträger (2,3) einschiebbar ausgebildet ist.

4. Vorderwagenstruktur nach Anspruch 3,
**dadurch gekennzeichnet,**
- **dass** die Verbindungsträger (13,13') und die Längsträger (2,3) jeweils ein C-Profil aufweisen und
- **dass** ein Außenmaß des jeweiligen Verbindungsträgers (13,13') in zusammengebautem Zustand mit einem Innenmaß des jeweiligen Längsträgers (2,3) korrespondiert.

5. Vorderwagenstruktur nach einem der Ansprüche 1 bis 4,
**dadurch gekennzeichnet,**
**dass** Innenteil (7), Oberteil (5) und Unterteil (4) mittels sich entlang der abgekanteten Randabschnitte (8) erstreckenden Schweißverbindungen verbunden sind.

6. Vorderwagenstruktur nach einem der Ansprüche 1 bis 5,
**dadurch gekennzeichnet,**
**dass** Innenteil (7), Oberteil (5) und Unterteil (4) in gleicher und/oder unterschiedlicher Blechstärke ausbildbar sind.

7. Vorderwagenstruktur nach einem der Ansprüche 1 bis 6,
**dadurch gekennzeichnet,**
**dass** die Randabschnitte (8) durch Einschnitte (15) voneinander getrennt ausgebildet sind.

8. Vorderwagenstruktur nach einem der Ansprüche 1 bis 7,
**dadurch gekennzeichnet,**
**dass** am Innenteil (7) Konsolen (12) angeordnet sind, die zur Versteifung des Verbindungsträgers (13,13') ausgebildet sind.

9. Vorderwagenstruktur nach einem der Ansprüche 1 bis 8,
**dadurch gekennzeichnet,**
**dass** die Vorderwagenstruktur (1) im Bereich der Verbindungsträger (13,13') zur Aufnahme einer Starrachse oder einer Einzelradaufhängung ausgebildet ist.

10. Vorderwagenstruktur nach einem der Ansprüche 1 bis 9,
**dadurch gekennzeichnet ,**
**dass** die Vorderwagenstruktur (1) im Bereich der Verbindungsträger (13,13') zur Aufnahme einer Starrachse oder einer Einzelradaufhängung ausgebildet ist.

## Claims

1. Front-end vehicle structure (1) for a motor vehicle, in particular for a commercial vehicle, comprising two longitudinal members (2, 3) and two crash box elements (6, 10),
- two connecting members (13, 13') being provided which each connect one of the longitudinal members (2, 3) to the associated crash box element (10, 6),
- the connecting members (13, 13') each being assembled from an inner part (7) and, in order to reinforce the inner part (7), from an upper part (5) and a lower part (4),
**characterized**
- **in that** the inner part is an inner shell (7) which is essentially positioned in an upright manner and has, at an upper end, bent-over, upper edge sections (8) and, at a lower end, further bent-over, lower edge sections (8),
- **in that** the upper part is an upper sheet-metal strip (5) which runs parallel to the upper edge sections (8), bears extensively against them and is connected thereto,
- **in that** the lower part is a lower sheet-metal strip (4) which runs parallel to the lower edge sections (8), bears extensively against them and is connected thereto.

2. Front-end vehicle structure according to Claim 1, **characterized in that** the inner part (7), upper part (5) and lower part (4) are designed as bent sheet-metal parts, the upper part (5) and lower part (4) being arranged essentially on the edge of the inner part (7) and transversely thereto.

3. Front-end vehicle structure according to either of Claims 1 and 2, **characterized in that** each connecting member (13, 13') is designed in a manner such that it can be pushed by its front end into the associated crash box element (10, 6) and/or by its rear end into the associated longitudinal member (2, 3).

4. Front-end vehicle structure according to Claim 3,
**characterized**
- **in that** the connecting members (13, 13') and the longitudinal members (2, 3) each have a C-profile, and
- **in that** an external size of the respective connecting member (13, 13') corresponds, in the assembled state, with an internal size of the respective longitudinal member (2, 3).

5. Front-end vehicle structure according to one of Claims 1 to 4, **characterized in that** the inner part (7), the upper part (5) and the lower part (4) are connected by means of welds extending along the bent-over edge sections (8).

6. Front-end vehicle structure according to one of Claims 1 to 5, **characterized in that** the inner part (7), the upper part (5) and the lower part (4) can be formed with an identical and/or different sheet-metal thickness.

7. Front-end vehicle structure according to one of Claims 1 to 6, **characterized in that** the edge sections (8) are designed in a manner such that they are separated from one another by means of incisions (15).

8. Front-end vehicle structure according to one of Claims 1 to 7, **characterized in that** brackets (12) are arranged on the inner part (7) and are designed for reinforcing the connecting member (13, 13').

9. Front-end vehicle structure according to one of Claims 1 to 8, **characterized in that** the front-end vehicle structure (1) is designed in the region of the connecting members (13, 13') for receiving a rigid axle or an individual wheel suspension.

10. Front-end vehicle structure according to one of Claims 1 to 9, **characterized in that** the front-end vehicle structure (1) is designed in the region of the connecting members (13, 13') for receiving a rigid axle or an individual wheel suspension.

## Revendications

1. Structure avant (1) pour un véhicule automobile, en particulier pour un véhicule utilitaire, comprenant deux longerons (2, 3) ainsi que deux éléments de boîtier de collision (6, 10) ,
- deux supports de liaison (13, 13') étant prévus, lesquels relient chacun l'un des longerons (2, 3) à l'élément de boîte de collision (10, 6) spécifique,
- les supports de liaison (13, 13',) étant assemblés chacun à partir d'une partie intérieure (7) et pour le renfort de la partie intérieure (7) à partir d'une partie supérieure (5) et d'une partie inférieure (4),
**caractérisée en ce que**
- la partie intérieure est une coque intérieure (7) qui est positionnée sensiblement verticalement et présente sur une extrémité supérieure des sections de bordure (8) supérieures repliées et sur une extrémité inférieure d'autres sections de bordure (8) inférieures repliées,
- **en ce que** la partie inférieure est une bande de tôle (5) supérieure, qui est agencée parallèlement aux sections de bordure (8) supérieures, s'appuie en surface sur celles-ci et est reliée à elles,
- en que la partie inférieure est une bande de tôle (4) inférieure, qui est agencée parallèlement aux sections de bordure (8) inférieures, s'appuie à plat sur celles-ci et est reliée à elles.

2. Structure avant de voiture selon la revendication 1, **caractérisée en ce que** la partie intérieure (7), la partie supérieure (5) et la partie inférieure (4) sont conçues comme des parties cintrées en tôle, la partie supérieure (5) et la partie inférieure (4) étant disposées sensiblement côté bordure sur la partie intérieure (7) et transversalement à celle-ci.

3. Structure avant de voiture selon l'une quelconque des revendications 1 et 2, **caractérisée en ce que** chaque support de liaison (13, 13') est conçu de façon à pouvoir entrer avec son extrémité avant dans l'élément de boîtier de collision (10, 6) spécifique et/ou avec son extrémité arrière dans le longeron (2, 3) spécifique.

4. Structure avant de voiture selon la revendication 3, **caractérisée en ce que**
- les supports de liaison (13, 13') et les longerons (2, 3) présentent chacun un profil en C et
- **en ce qu'**une cote extérieure du support de liaison (13, 13') respectif correspond dans l'état assemblé avec une cote intérieure du longeron (2, 3) respectif.

5. Structure avant de voiture selon l'une quelconque des revendications 1 à 4, **caractérisée en ce que** la partie intérieure (7), la partie supérieure (5) et la partie inférieure (4) sont reliées au moyen d'assemblages soudés s'étendant le long des sections de bordure (8) repliées.

6. Structure avant de voiture selon l'une quelconque des revendications 1 à 5, **caractérisée en ce que** la partie intérieure (7), la partie supérieure (5) et la partie inférieure (4.) peuvent être réalisées dans une épaisseur de tôle identique et/ou différente.

7. Structure avant de voiture selon l'une quelconque des revendications 1 à 6, **caractérisée en ce que** les sections de bordure (8) sont réalisées séparées les unes des autres par des entailles (15).

8. Structure avant de voiture selon l'une quelconque des revendications 1 à 7, **caractérisée en ce que** des consoles (12), qui sont réalisées pour le renfort du support de liaison (13, 13'), sont disposées sur la partie intérieure (7).

9. Structure avant de voiture selon l'une quelconque des revendications 1 à 8, **caractérisée en ce que** la structure avant de voiture (1) est réalisée dans la zone des supports de liaison (13, 13') pour le logement d'un essieu rigide ou d'une suspension de roue individuelle.

10. Structure avant de voiture selon l'une quelconque des revendications 1 à 9, **caractérisée en ce que** la structure avant de voiture (1) est réalisée dans la zone des supports de liaison (13, 13') pour le logement d'un essieu rigide ou d'une suspension de roue individuelle.
